# Europäisches Patentamt

## European Patent Office

## Office européen des brevets

(19)

(11) Veröffentlichungsnummer: **0 154 694**
**A1**

(12) # EUROPÄISCHE PATENTANMELDUNG

(21) Anmeldenummer: **84115052.7**

(22) Anmeldetag: **10.12.84**

(51) Int. Cl.⁴: **H 02 M 7/162**

(30) Priorität: **08.02.84 DE 3404446**

(43) Veröffentlichungstag der Anmeldung: **18.09.85**
**Patentblatt 85/38**

(84) Benannte Vertragsstaaten: **BE CH DE FR GB IT LI NL SE**

(71) Anmelder: **Siemens Aktiengesellschaft, Berlin und München Wittelsbacherplatz 2, D-8000 München 2 (DE)**

(72) Erfinder: **Frystacki, Henryk, Dipl.-Ing., Mozartstrasse 9, D-8033 Krailling (DE)**

(54) **Phasenanshnittsteuerung für ein Transformatornetzteil.**

(57) Die Erfindung betrifft eine Phasenanschnittsteuerung für ein Transformatornetzteil mit einem Transformator (TR) und einem Lastkreis (LK). Der Lastkreis (LK) enthält einen steuerbaren Brückengleichrichter (SB) mit zwei schaltbaren Thyristoren (D1 und D2), die über einen Steuertransistor (T1) in einem Steuerkreis (SK) zündbar sind. In Abhängigkeit von einer Ausgangsgleichspannung (UA) wird der Steuertransistor (T1) derart angesteuert, daß dieser eine lückenlose Zündimpulsauslösung zu jeder aufeinanderfolgenden Halbwelle der am steuerbaren Brückengleichrichter (SB) anliegenden sekundären Transformatorspannung (UT) erfolgt.

Siemens Aktiengesellschaft — 1 —    Unser Zeichen
Berlin und München                 VPA 84 P 1 0 8 3 E

## Phasenanschnittsteuerung für ein Transformatornetzteil

Die Erfindung betrifft eine Phasenanschnittsteuerung gemäß dem Oberbegriff des Patentanspruchs 1.

Phasenanschnittsteuerungen finden bekanntlich in Trans- formatornetzteilen mit steuerbaren Brückengleichrichtern Anwendung. Dabei wird über einen Spannungsregler der Thyristor des steuerbaren Brückengleichrichters in Abhängig- keit vom Wert einer Ausgangsspannung gezündet. Bei dieser Phasenanschnittsteuerung wird der Strom zur Einhaltung der Ausgangsspannung stoßweise übertragen, wodurch starke Ausgangsschwankungen auftreten. Zudem ist dadurch weiter nur ein begrenzter Eingangsspannungsbereich, bei Einhaltung einer vorgegebenen Ausgangsspannung, an das Transformatornetzteil anlegbar.

Es ist Aufgabe der Erfindung, eine Phasenanschnittsteuerung für ein Transformatornetzteil anzugeben, die, bei einer vorgegebenen Ausgangsspannung, einen großen Eingangsspannungsbereich ausregelt.

Diese Aufgabe wird erfindungsgemäß durch die im kennzeichnenden Teil des Patentanspruchs 1 angegebenen Merkmale gelöst.

Duch die Symmetrierschaltung ist die Stromaufnahme pro Zündimpuls geringer, so daß die Abstrahlung von Störimpulsen auf den Versorgungsleitungen wesentlich geringer ist.

Kro 1 Obh / 06.02.1984

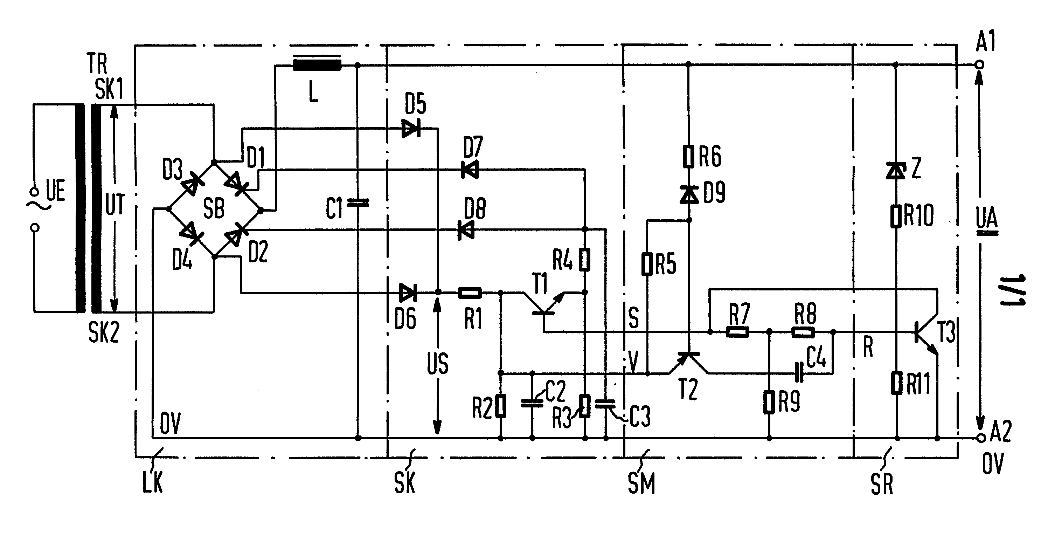

Im folgenden wird die Erfindung anhand eines in der Zeichnung dargestellten Ausführungsbeispieles erläutert.

Die in der Zeichnung dargestellte Schaltungsanordnung besteht aus einem Transformator TR, einem Lastkreis LK, einem Steuerkreis SK, einer Symmetrierschaltung SM und einem Spannungsregler SR. An der Primärwicklung des Transformators TR liegt eine Eingangswechselspannung UE an. An Sekundärklemmen SK1 und SK2 ist eine Transformatorspannung UT abgreifbar.

Der Lastkreis Lk enthält einen steuerbaren Brückengleichrichter SB, dessen negativer Anschlußpunkt mit einer Ausgangsklemme A2, und dessen positiver Anschlußpunkt über eine Induktivität L mit einer Ausgangsklemme A1 verbunden ist. Zwischen den beiden Ausgangsklemmen A1 und A2 ist eine Ausgangsgleichspannung UA abgreifbar. Das an der Ausgangsklemme A2 abgreifbare Potential wird auch als Bezugspotential 0V bezeichnet. Der Lastkreis LK weist weiter einen zwischen die Ausgangsklemmen A1 und A2 geschalteten Glättungskondensator C1 auf.

Der steuerbare Brückengleichrichter SB im Lastkreis LK besteht aus zwei Thyristoren D1 und D2 und zwei Dioden D3 und D4 in Brückenschaltung. Die beiden Thyristoren D1 und D2 sind zwischen den positiven Anschlußpunkt des steuerbaren Brückengleichrichters SB und die Sekundärklemme SK1 bzw. SK2 des Transformators TR geschaltet. Die Dioden D3 und D4 sind zwischen das Bezugspotential 0V und die Sekundärklemmen SK1 bzw. SK2 des Transformators TR geschaltet.

Der Steuerkreis SK enthält zwei Dioden D5 und D6, deren Katoden zusammengeschaltet sind, und deren Anoden mit den Sekundärklemmen SK1 bzw. SK2 des Transformators TR verbunden sind. Die zusammengeschalteten Katoden, an denen eine Speisespannung US abgreifbar ist, sind über einen Widerstand R1, die Kollektor-Emitter-Strecke eines Steuertransistors T1 und einen Widerstand R4 mit zusammengeschalteten Anoden von zwei Dioden D7 und D8 verbunden. Die Katoden der Dioden D7 bzw. D8 sind mit den nicht näher bezeichneten Zündeingängen der Thyristoren D1 bzw. D2 verbunden. Die Katode des Steuertransistors T1 ist über eine Parallelschaltung aus einem Widerstand R2 und einem Kondensator C2 mit dem Bezugspotential 0V verbunden. Der Emitter des Steuertransistors T1 ist über einen Widerstand R3, und die zusammengeschalteten Anoden der Dioden D7 und D8 sind über einen Kondensator C3 mit dem Bezugspotential 0V verbunden. Basis bzw. Kollektor des Steuertransistors T1 sind über eine Steuerklemme S bzw. eine Versorgungsklemme V mit der Symmetrierschaltung SM verbunden.

Die Symmetrierschaltung SM enthält einen Transistor T2, dessen Emitter mit der Versorgungsklemme V, und dessen Basis einerseits über eine in Flußrichtung gepolte Diode D9 und einen Widerstand R6 mit der Ausgangsklemme A1, und andererseits über einen Widerstand R5 mit der Versorgungsklemme V verbunden sind. Der Kollektor des Transistors T2 ist über einen Widerstand R9 mit dem Bezugspotential 0V, über einen Widerstand R7 mit der Steuerklemme S, und über eine Parallelschaltung aus einem Kondensator C4 und einem Widerstand R8 mit einer Reglerklemme R des Spannungsreglers SR verbunden.

Der Spannungsregler SR enthält einen Regeltransistor T3, dessen Emitter mit dem Bezugspotential 0V und dessen Kollektor mit der Steuerklemme S der Symmetrierschaltung SM verbunden ist. Die Basis des Regeltransistors T3 ist einerseits über einen Widerstand R11 mit dem Bezugspotential 0V, und andererseits über einen Widerstand R10 über eine Zenerdiode Z mit der Ausgangsklemme A1 verbunden.

Die Basis des Regeltransistors T3 ist weiter mit der Reglerklemme R verbunden.

Im folgenden wird die Wirkungsweise der erfindungsgemäßen Schaltungsanordnung beschrieben.

Die Eingangswechselspannung UE wird vom Transformator TR transformiert und an den Sekundärklemmen SK1 und SK2 als Transformatorspannung UT abgegeben. Diese wird im Lastkreis LK vom steuerbaren Brückengleichrichter SB gleichgerichtet, durch die Induktivität L und den Glättungskondensator C1 geglättet und an den Ausgangsklemmen A1 und A2 als Ausgangsgleichspannung UA abgegeben. Die Induktivität L dient weiter zur Reduzierung der Schaltleistung der Thyristoren D1 und D2 durch Begrenzung der Stromanstiegsgeschwindigkeit.

Die über die Dioden D5 und D6 im Steuerkreis SK ausgekoppelte und gleichgerichtete Speisespannung US wird über den Widerstand R1 vom Steuertransistor T1 über den Widerstand R4 und die Dioden D7 bzw. D8 zur Zündung der Thyristoren D1 bzw. D2 durchgeschaltet. Die Widerstände R1 und R2 begrenzen zusammen mit dem Kondensator C2 die Einschaltspannungsspitzen am Steuertransistor T1. Der Kondensator C3 dient zur Entstörung der Zündeingänge der Thyristoren D1 und D2, und der Widerstand R4 zur Entladung des Kondensators C3 sowie der Restkapazitäten.

Die Symmetrierschaltung SM ist über die Versorgungsklemme V und über den Widerstand R1 an der Speisespannung US angeschaltet. Falls die Differenz zwischen der Transformatorspannung UT und der Ausgangsgleichspannung UA einen durch die Widerstände R5 und R6, die Diode D9 und den Transistor T2 festgelegten Schwellwert überschreitet, wird der Transistor T2 kurzzeitig leitend geschaltet.

Dies geschieht allerdings nur, solange der Regeltransistor T3 der Spannungsregelung SR noch gesperrt ist oder gesperrt wird. Im ersten Fall geschieht das während der Anlaufphase des Transformatornetzteiles, im zweiten Fall während einer Regelphase. Wenn der Transistor T2 der Symmetrierschaltung SM leitend geschaltet ist, gelangt über den Widerstand R7 an die Basis des Steuertransistors T1 ein Strom, wodurch dieser leitend geschaltet wird. Abhängig von der in diesem Zeitpunkt anliegenden Phase der Transformatorspannung UT wird einer der Thyristoren D1 bzw. D2 hierdurch gezündet.

Wenn die Ausgangsgleichspannung UA unter einen durch die Zenerdiode Z und durch die Widerstände R10 und R11 des Spannungsreglers SR festgelegten Schwellwert während der Leitendphase des Transistors T2 sinkt, so wird der Steuertransistor T1 kurzzeitig leitend geschaltet und einer der Thyristoren D1 und D2 gezündet. Die Zündung eines der Thyristoren D1 oder D2 erfolgt auch durch eine Sperrung des Transistors T2. Durch die Abschaltflanke entsteht im Kondensator C4 ein Differenzierimpuls, und dieser sperrt den Regeltransistor T3. Der Spannungsregler SR dient zur Konstanthaltung der Ausgangsgleichspannung UA und zur lastabhängigen Verschiebung des Zündzeitpunktes. Steigt der Laststrom durch die Induktivität L an, so fällt die Ausgangsgleichspannung UA während der Entladephase des Glättungskondensators C1 früher unter den durch die Zenerdiode Z festgelegten Schwellwert. Die am steuerbaren Brückengleichrichter SB anliegende Halbwelle wird also durch einen der Thyristoren D1 oder D2 früher angeschnitten.

0154694

Der Spannungsregler SR sorgt zusammen mit der Symmetrierschaltung SM für eine lückenlose Zündimpulsauslösung der
Thyristoren D1 und D2 mit jeder der aufeinanderfolgenden
Halbwellen am steuerbaren Brückengleichrichter SB.

3 Patentansprüche

1 Figuren

0154694

## Patentansprüche

1. Phasenanschnittsteuerung für ein Transformatornetzteil mit einem Transformator (TR) und einem Lastkreis (LK), g e k e n n z e i c h n e t   d u r c h   eine steuerbare Brückenschaltung (SB) mit zwei schaltbaren Thyristoren (D1 und D2) im Lastkreis, durch einen Steuerkreis (SK) mit einem Steuertransistor (T1), der kurze Zündimpulse an die Thyristoren (D1,D2) gibt, durch eine Symmetrierschaltung (SM) und einen Spannungsregler (SR), wobei die Symmetrierschaltung (SM) in Abhängigkeit von einer Ausgangsgleichspannung (UA) den Steuertransistor (T1) derart ansteuert, daß eine lückenlose Zündimpulsauslösung zu jeder aufeinanderfolgenden Halbwelle einer am steuerbaren Brückengleichrichter (SB) anliegenden sekundären Transformatorspannung (UT) erfolgt.

2. Phasenanschnittsteuerung nach Anspruch 1, d a d u r c h   g e k e n n z e i c h n e t ,   daß zwei Dioden (D5,D6) vorgesehen sind, über die eine Speisespannung (US) für den Steuerkreis (SK) und für die Symmetrierschaltung (SM) auskoppelbar ist.

3. Phasenanschnittsteuerung nach Anspruch 1 oder 2, d a d u r c h   g e k e n n z e i c h n e t ,   daß die Speisespannung (US) über den Steuertransistor (T1) kurzzeitig an die Thyristoren (D1 und D2) anschaltbar ist.

0154694

1/1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 767 998 (BELING) <br> * Spalte 3, Zeile 62 - Spalte 4, Zeile 46 * | 1 | H 02 M 7/162 |
| A | WO-A-8 302 370 (BECKMAN INSTRUMENTS) <br> * Seite 3, Zeile 25 - Seite 4, Zeile 33 * | 1 | |
| A | DE-A-2 305 614 (STÖCKLER) <br> * Seiten 6,7 * | 2,3 | |

RECHERCHIERTE SACHGEBIETE (Int. Cl.4)

H 02 M

Der vorliegende Recherchenbericht wurde für alle Patentansprüche erstellt.

| Recherchenort <br> DEN HAAG | Abschlußdatum der Recherche <br> 08-05-1985 | Prüfer <br> KERN H. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03 82